# EUROPEAN PATENT APPLICATION

(11) **EP 4 388 924 A1**
(43) Date of publication of application: **26.06.2024**
(21) Application number: 23218619.7
(22) Date of filing: 20.12.2023
(51) Int. Cl.: A45C 5/14, A45C 7/00, A45C 11/00, B25H 3/00, B25H 3/02, B65D 21/00, B65D 21/02, F04D 29/60

(54) **STACKABLE FAN**

(30) Priority: 20.12.2022 US 202263476229 P
(71) Applicant: The Stanley Works Israel Ltd., 48091 Rosh Ha'Ayin (IL)
(72) Inventor: RAN, Amit, 7683976 Mazkeret Batia (IL); SHABTAI, Yotam, 4439107 Kfar-Sava (IL)
(74) Representative: SBD IPAdmin

(57) **Abstract**

A stackable fan includes a base and a cover pivotable secured thereon. One or more fan blades is formed in the cover. The base includes two lower steps extending downwardly therefrom and a spring-biased latch extending upwardly from an upper edge. The cover includes a ledge having an overhanging portion disposed opposite the spring biased latch. The fan may be secured on top of the cover or beneath the base of variously sized storage containers which also includes steps and latches. The fan may be part of a stackable wheeled storage container system.

## Description

### FIELD OF THE INVENTION

The present invention relates to a stackable fan which may form part of a stackable storage container system which includes a plurality of storage containers which may be secured to each other, for example, for joint movement by a wheeled cart.

### BACKGROUND

Stackable storage containers are known, for example, the rolling container assembly shown in U.S. Patent Nos. 8,132,819 and 9,132,543. The assembly disclosed therein includes a base storage container which is disposable on a cart which is provided with wheels and an integral handle system. At least one further storage container may be removably attached on top of the base container, allowing for multiple containers to be jointly transported. The mechanism for attaching the containers to each other in such systems may include a stacking latch mechanism, for example, as shown in U.S. Patent Application Publication Nos. 2020/0025229 and 2020/0298392. The mechanism includes a spring loaded pivotable latch having a hook disposed on the lid of the container and a step formed on the lower housing of the container. The latch hook is selectively disposable over the step to thereby secure the containers together. U.S. Patent No. 8,505,729 discloses a stackable container system in which each container includes a latch member and a ledge formed on the outer surface. The latch of a lower container is foldable over the ledge of an upper container to secure the upper and lower containers together.

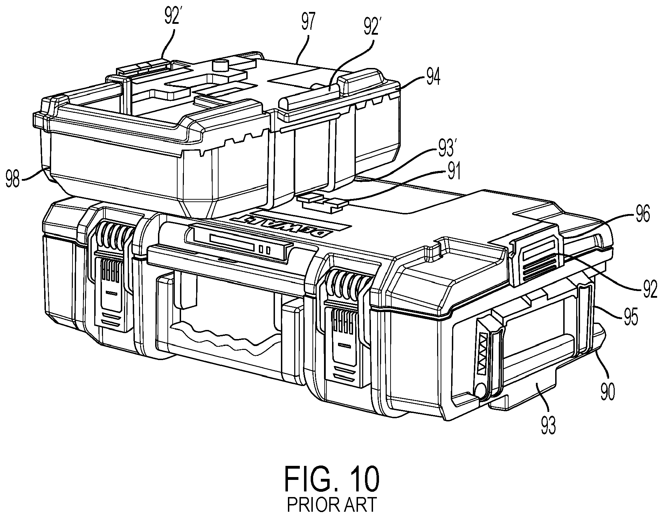

With further reference to Prior Art Figure 10, components of a known stackable system are shown. Container 90 includes base 95 having an interior storage volume and cover 96 pivotably attached to base 95. Base 95 includes step 93 extending downwardly from a lower side edge thereof. Though not shown, a second step having the same structure extends downwardly from the opposite lower side edge. Spring biased latch 92 extends upwardly from the upper side edge of cover 96. Though not shown a second spring biased latch having the same structure would extend upwardly from the opposite side edge of cover 96. T-Tab 91 extends upwardly from a central region of cover 96 and has two overhanging ledges. T-Tab may be raised or lowered from the upper surface of cover 96. Conventional accessory box 94 includes base 98 and pivotable cover 97 disposed thereon. Step 93' having the same structure as step 93 extends downwardly from a lower long side edge thereof. Though not shown a second step having the same structure would extend from the opposite long side edge thereof. Spring biased latch 92' having the same structure as spring biased latch 92 extends upwardly from the front side edge of cover 97. To secure accessory box 94 onto container 90, step 93' is inserted beneath a ledge of raised T-Tab 91, and the opposite side step is secured beneath the second spring biased latch of container 90. Alternatively, T-Tab 91 could be lowered and a container having substantially the same overall lower surface area as the upper surface of cover 96 of container 90 could be secured between the two spring biased latches 92 (and the not shown latch. A further container could be secured on cover 97 between spring biased latches 92'. The structure of latches 92,92' and steps 93,93'could for example have the structure as shown in the above-referenced published patent applications.

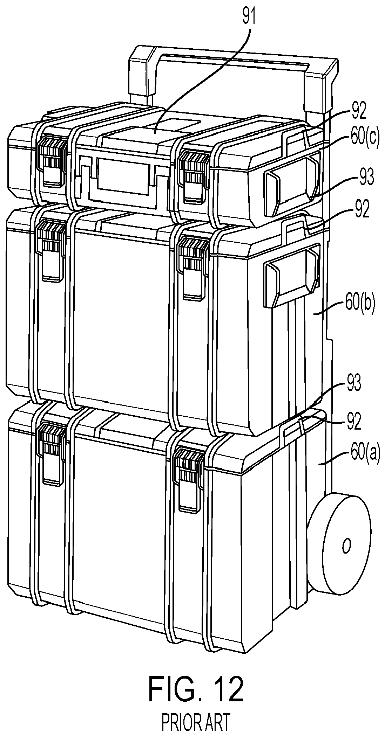

With reference to Prior Art Figure 12, a further known stackable storage system is disclosed. The stackable storage system includes a plurality of stackable storage containers 60(a), 60(b) and 60(c), of varying sizes, each of which includes a cover having latch mechanisms 92 disposed thereon. Containers 60(b) and 60(c) each have steps 93. Chest 60(a) is the lowest container of the stack and may be integrally formed with wheels and an upright pull handle to allow the stackable storage system to be transported by tilting and rolling. Upper container 60(c) has the same structure as container 90 described above. The incorporation of latches 92, steps 93, and T-Tab 91 allows containers of various sizes to be incorporated into and secured in the stackable storage system.

### SUMMARY OF THE INVENTION

In a first embodiment the invention is directed to a container system including a container having an interior storage volume, and a fan. Each of the fan and container is stackable and securable on the other of the fan and the container.

In a further embodiment the invention is directed to a container system including a chest defining a chest interior storage volume and having a plurality of wheels attached thereto. The container system further includes a storage container including a storage container interior storage volume. The container also includes a fan. The fan and storage container are each removably stackable and securable simultaneously on the chest.

In a further embodiment the invention is directed to a fan for use with a container having an interior storage volume and including a step and a latch. The fan includes a step and latch. Each of the fan and the container is stackable on the other of the fan and container, with the latch of one of the fan and the container engaging the step of the other of the fan and the container to secure the fan to the container.

These and other objects, features, and characteristics of the present invention, as well as the methods of operation and functions of the related elements of structure and the combination of parts will become more apparent upon consideration of the following description and the appended claims with reference to the accompanying drawings, all of which form a part of this specification, wherein like reference numerals designate corresponding parts in the various figures. It is to be expressly understood, that the drawings are for the purpose of illustration and description only, and are not intended as a definition of the limits of the invention. In addition, it should be appreciated that structural features shown or described in any one embodiment herein can be used in other embodiments as well. As used in the specification and in the claims, the singular form of "a", "an", and "the" include plural references unless the context clearly dictates otherwise.

### BRIEF DESCRIPTION OF THE DRAWINGS

Figure 1 is a perspective view of a stackable fan according to the invention with the cover thereof in an opened position or condition.
Figure 2 side view of the stackable fan shown in Figure 1 with the cover in a closed condition.
Figure 3 is a perspective view of the lower side of the stackable fan shown in Figure 1.
Figure 4 is a perspective view of the upper side of the stackable fan shown in Figure 1 with the cover in the closed condition.
Figure 5 is a perspective view of the back side the stackable fan shown in Figure 1 with the cover in the open condition.
Figure 6 is front side view of the stackable fan shown in Figure 1 with the cover in the open condition.
Figure 7 a top side perspective view of the stackable fan shown in Figure 1 with the cover not shown.
Figure 8 is a perspective view of a stackable storage system incorporating the stackable fan shown in Figure 1.
Figure 9 is perspective view showing the stackable fan shown in Figure 1 secured on a storage container.
Figure 9A is perspective view showing two stackable fans shown in Figure 1 secured on a storage container.
Figure 9B is perspective view showing two stackable fans shown in Figure 1 secured on a storage container with a further storage container disclosed thereon.
Figure 10 is a perspective view of a prior art stackable storage system incorporating a T-tab on the cover thereof.
Figure 11 is a perspective view of a stackable fan according to a second embodiment of the invention secured on a storage container.
Figure 12 is a perspective view of a prior art stackable storage system incorporating a dolly.
Figure 13 is a perspective view of a stackable fan according to the second embodiment of the invention.

### DETAILED DESCRIPTION OF EXEMPLARY EMBODIMENTS

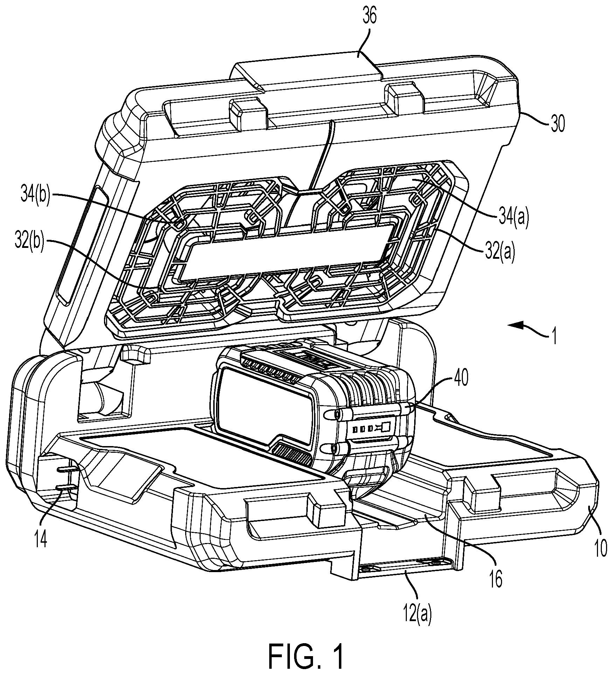

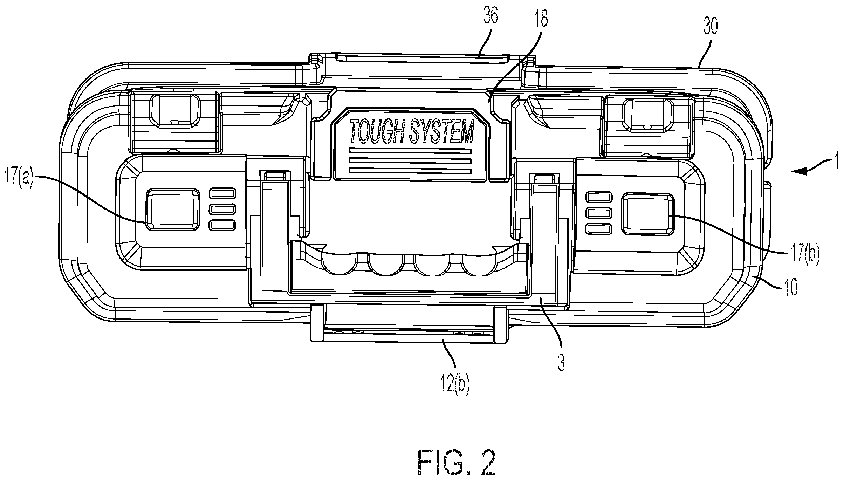

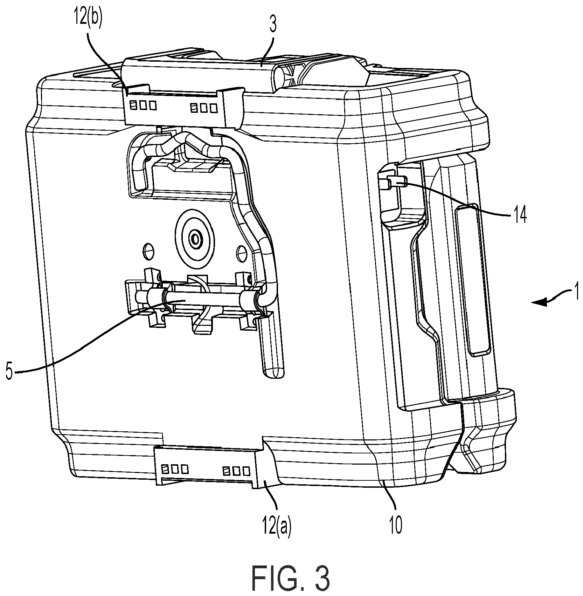

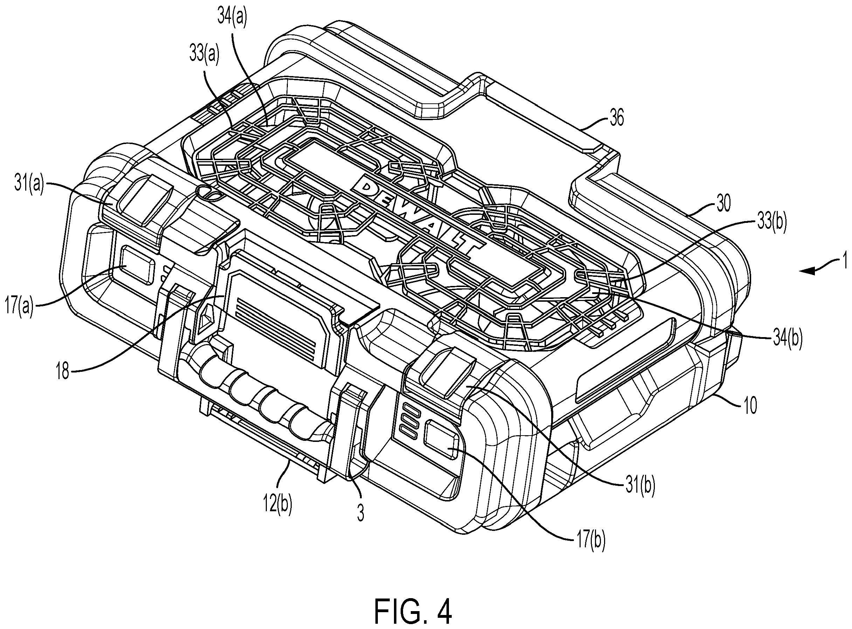

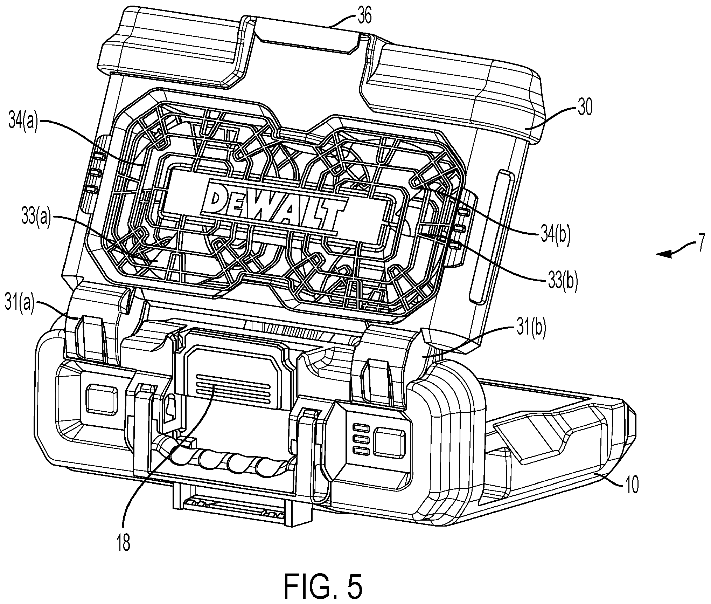

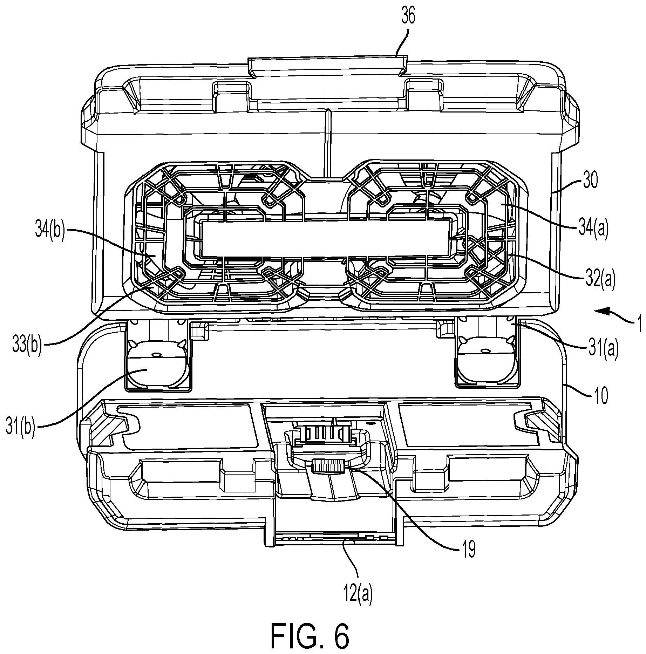

With reference to Figures 1-6, a stackable fan according to the present invention is shown. Stackable fan 1 incudes base 10 and cover 30 pivotably secured to base 10 about conventional pivoting structure. Cover 30 may be pivoted between the open position as shown in Figure 1 when it is disposed at an angle to base 10 and a closed position as shown in Figure 4 where is disposed substantially parallel to base 10 and covers the interior thereof. Cover 30 may be pivoted between the closed position, a perpendicular position or a position in which is open at 180 degrees to the base 10.

Base 10 includes front and rear steps 12a and 12b extending downwardly from a lower edge thereof and which may have substantially the same structure as steps 93 and 93' described above with respect to the prior art. Base 10 further includes spring biased latch 18 extending upwardly therefrom from the rear edge, above rear step 12b and having a structure similar to spring biased latch 92 described above. Latch 18 extends above the upper surface of cover 30 when cover 30 is in the closed position. Base 10 further includes AC adapter plug 14 disposed on a side surface and which can be connected to a conventional extension cord to provide power to stackable fan 1. Battery pack sliding channel 16 is formed on an upper surface and extends to battery terminals 19 at the rear thereof. Rechargeable battery pack 40 is known in the prior art and may be slid along sliding channel 16 to connect with suitable and conventional circuitry to provide an alternative source of power for stackable fan 1, and to also charge battery pack 40 when it is connected to battery terminals 19.

Base 10 further includes hanging hook 5 which is pivotably attached to a lower surface thereof. Hanging hook 5 can be extended to allow stackable fan 1 to be hung from a suitable support. Handle 3 is pivotably attached to a rear surface of base 10 and allows stackable fan 1 to be carried.

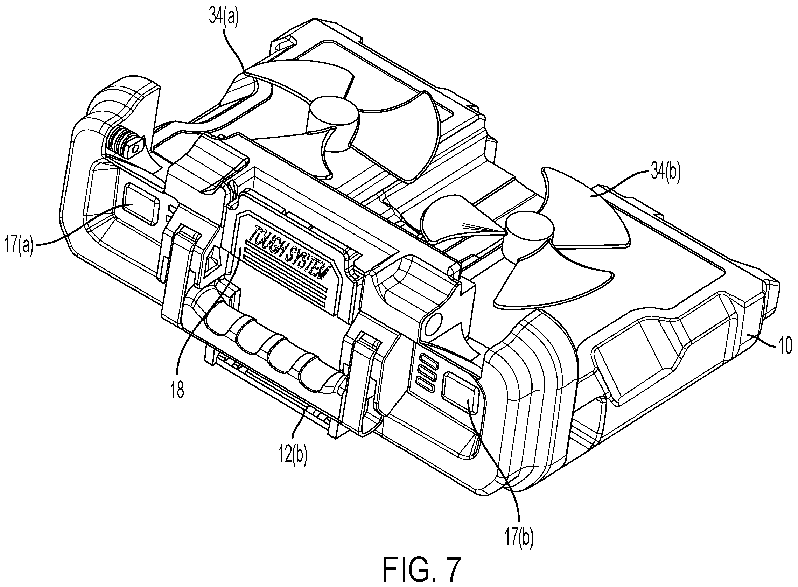

Cover 30 includes right and left lower fan screens 32(a) and 32(b) and right and left upper fan screens 33(a) and 33(b). Right and left fan blades 34(a) and 34(b), for example, as shown in the cutaway view of Figure 7 are rotatably supported within cover 30 between the respective upper and lower fan screens. The rotating shafts of fan blades 34(a) and 34(b) are rotated by conventional motors, (not shown) which are powered by via AC adaptor 14 or battery pack 40. Each fan blade 34(a) or 34(b) can be controlled separately by on/off push buttons 17(a) and 17(b), respectively. Cover 30 further includes cover projections 31(a) and 31(b) which are pivotably mounted on base 10. Cover 30 further includes cover ledge 36 extending upwardly from the front edge thereof and having an inwardly extending overhanging portion.

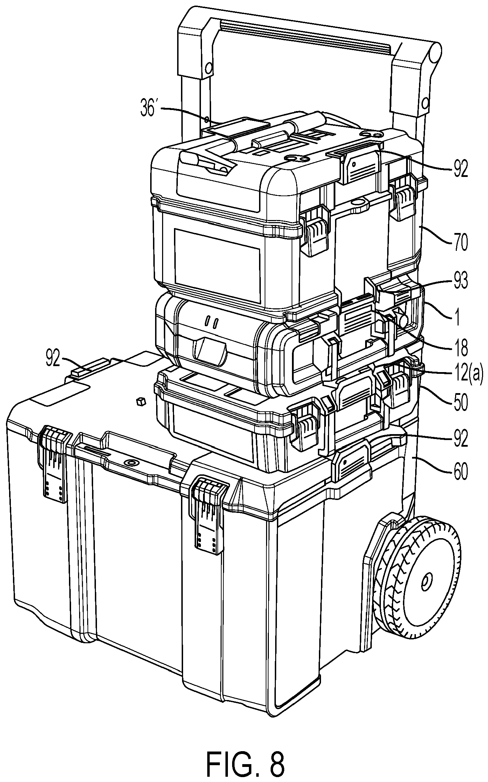

With reference to Figure 8, stackable fan 1 can be incorporated into a stackable storage system, for example, a system including chest 60 (having the same structure as chest 60(a) described above), small storage container 50 and large storage container 70. Chest 60 is integrally formed with wheels and a telescoping handle to allow for wheeled transport. As shown for example, all of stackable fan 1, small storage container 50 and large storage container 70 cover about half of the surface area of the cover of chest 60. Stackable fan 1 is shown for example as being secured on the cover of small storage container 50, with steps 12(a) and 12(b)(not shown in the figure) being secured by spring biased latches 92 disposed on container 50. Large storage container 70 is secured on cover 30, with one lower step 93 secured by spring biased latch 18. The other (rear) lower step of large storage container 70 would be secured beneath the overhanging portion of cover ledge 36. In practice, to secure large storage container 70 on cover 30, the rear lower step would be inserted beneath the overhanging portion of cover ledge 36 and then the front edge of large storage container 70 would be lowered onto spring biased latch 18 which moves outwardly to allow step 93 to pass over an inner projection or hook, with the latch then being biased back inwardly such that the inner projection or hook of the latch is disposed over step 93, in a manner shown and described in the above referenced U.S. Patent Application Publication Nos. 2020/0025229 and 2020/0298392.

Though shown as being secured on small container 50, stackable fan 1 could also be secured directly to the cover of chest 60, with one of front step 12(a) or rear step 12(b) secured beneath a T-Tab (not shown in Figure 8 but similar in structure to T-Tab 91) and the other step secured by spring biased latch 92 formed on chest 60. Similarly, small storage container 50 could be secured on cover 30 of stackable fan 1 with the lower steps of small storage container 50 fitting with ledge 36 and spring biased latch 18. Alternatively, stackable fan 1 could be disposed on the cover of large storage container 70, with front step 12(a) and rear step 12(b) secured to the spring biased latch 92 and overhanging ledge 36' (having a similar structure to ledge 36) formed on the cover of container 70.

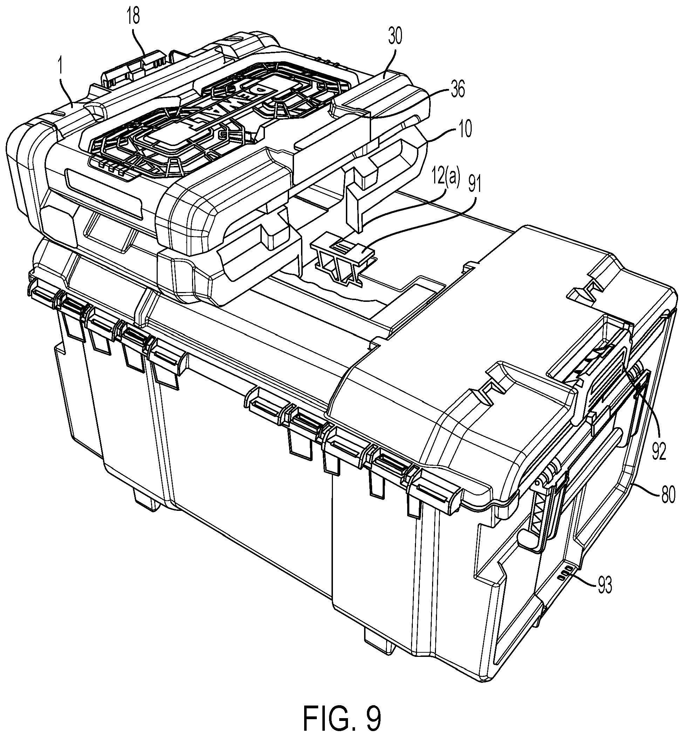

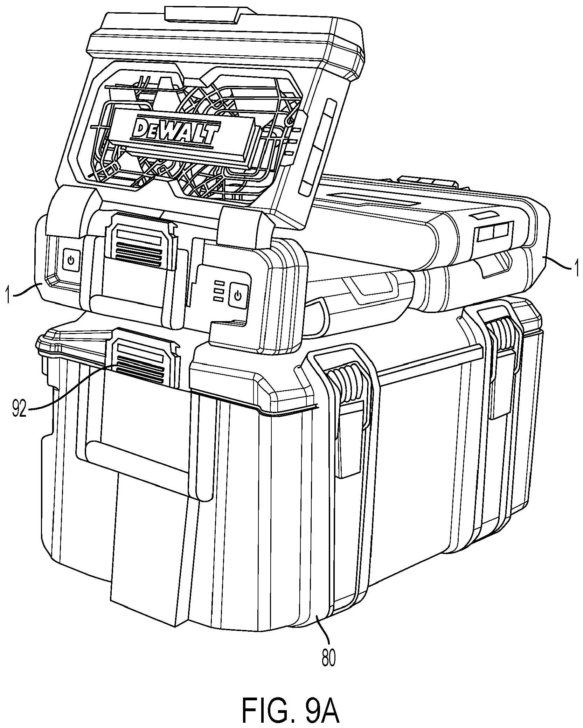

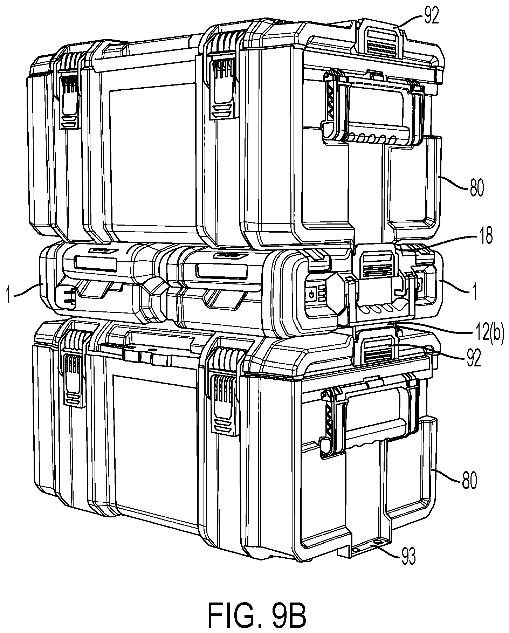

With reference to Figure 9, an alternative configuration is shown. In Figure 9, large storage chest 80 has a similar structure to wheeled storage chest 60 but is not integrally formed with wheels and a handle. As shown, stackable fan 1 is secured on the cover of large storage chest 80 with front step 12(a) disposed beneath T-Tab 91. Rear step 12(b) is secured by spring biased latch 92. With reference to Figure 9A, two stackable fans 1 are secured on the cover of large storage chest 80, with front steps 12(a) of each stackable fan 1 secured beneath a T-Tab (not shown) and rear steps 12(b) of each stackable fan 1 secured by spring biased latches 92 (one shown). Stackable fans 1 are shown as disposed such that covers 30 open away from each other such that when open the lower screens 32(a) and 32(b) face each other, but could also be secured with covers 30 openable towards each other so as to be adjacent when both are open, that is upper screens 33(a) and 33(b) up one cover would be adjacent the uppers screens of the other cover 30. In this latter configuration, air flow in opposite directions would be possible. Alternatively, covers 30 could be disposed to be openable in the same direction such that one cover is disposed substantially co-planar with one latch 92 and the other in a plane intersecting the midline of chest 80. Instead of two stackable fans 1, one stackable fan 1 and one half-sized container, for example accessory box 94, could be secured on chest 80.

With reference to Figure 9B, two stackable fans 1 are shown secured on chest 80 with both in the folded closed condition so that upper surfaces of covers 30 form a generally continuous surface. A further chest 80 is secured on covers 30 of fans 1, with spring biased latch 18 of each cover 30 (only one latch shown) overlie steps 93 of further chest 80 to secure further chest 80 to both fans 1.

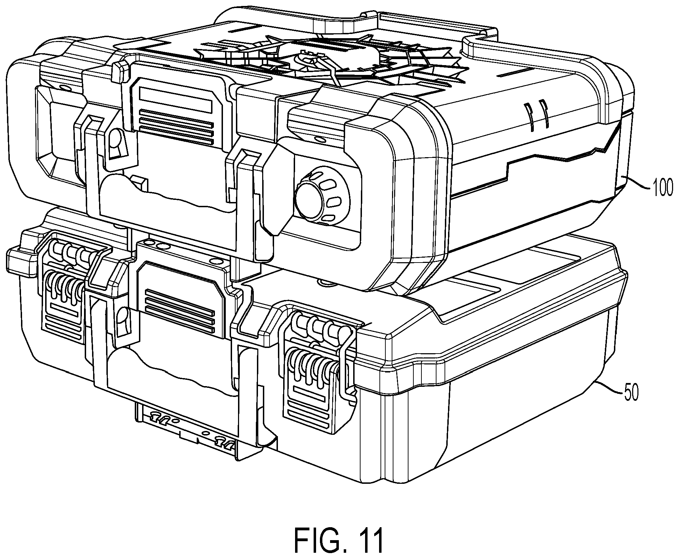

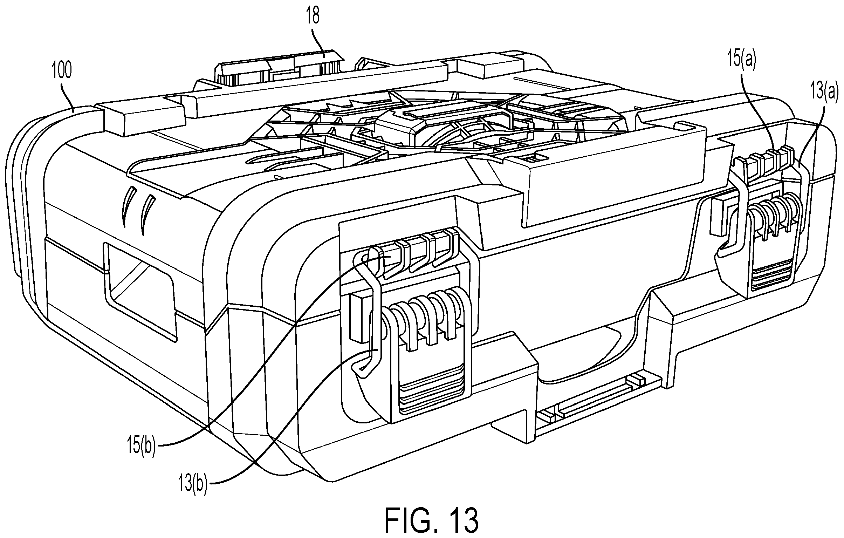

With reference to Figures 11 and 13, an alternative embodiment of a stackable fan according to the invention is shown. Stackable fan 100 includes only one fan blade disposed in the cover thereof, but in all other respects has the same structure of stackable fan 1. Stackable fan 100 is disposed on small storage container 50, but small storage container 50 could also be disposed on the cover of stackable fan 100 in accordance with the above description. Stackable fan 100 also includes right and left conventional buckle latches 13(a) and 13(b) disposed on the front surface of the base thereof and corresponding conventional left and right protruding steps 15(a) and 15(b) formed on the cover thereof which may be used to secure the cover in the closed position to the base. Though not shown, such conventional buckle latches and protruding steps could be incorporated into the first embodiment.

While the invention has been described by way of exemplary embodiments, it is understood that the words which have been used herein are words of description, rather than words of limitation. Changes may be made within the purview of the appended claims, without departing from the scope of the invention in its broader aspects.

## Claims

1. A container system comprising:
a container (90) having an interior storage volume;
a fan (1); and
**characterized in that** each of said fan (1) and said container (90) is stackable and securable on the other of said fan (1) and said container (90).

2. The container system recited in claim 1, wherein each of said container (90) and said fan (1) includes a step (12a, 12b, 93, 93') and a latch (18, 92, 92'), and wherein, when one of said container (90) and said fan (1) is stacked on the other of said container (90) and said fan (1), one of said latches (12a, 12b, 92, 92') engages one of said steps (18, 93, 93') to secure said one of said container (90) and said fan (1) to the other of said container (90) and said fan (1).

3. The container system recited in claim 2, said step (12a, 12b, 93, 93') of each of said container (90) and said fan (1) extending from a lower surface thereof and said latch (18, 92, 92;) of each of said container (90) and said fan (1) extending from an upper surface thereof, each said latch (18, 92, 92') disposed above each said step (12a, 12b, 93, 93').

4. The container system recited in any previous claim, wherein said fan (1) comprises a base (10) and a cover (30) pivotably secured to said base (10), cover (30) including a fan blade (34a, 34b).

5. The container system recited in claim 4, wherein said base (10) includes battery terminals (19), and wherein a battery pack (40) may be secured on said base (10) and connected to said terminals (19) to power said fan blade (34a, 34b).

6. The container system recited in claim 5, wherein said base (10) includes an AC plug (14), said AC plug (14) connectable to an AC cord to both provide power to said fan (1) and to charge the battery pack (40) when the battery pack (40) is connected to said terminals (19).

7. A container system comprising:
a chest (60) defining a chest interior storage volume and having a plurality of wheels attached thereto;
a storage container (90) including a storage container interior storage volume;
a fan (1); and
**characterized in that** said fan (1) and said storage container (90) are each removably stackable and securable on said chest (60).

8. The container system recited in claim 7, wherein said chest (60) includes a lid pivotable between a closed position in which said chest lid covers said chest interior storage volume and an open position in which said chest lid does not cover said chest interior storage volume, said chest lid including opposite sides and a chest lid latch (92) extending upwardly from one said opposite sides and a tab (91) extending upwardly at a location between said sides, and wherein, each of said fan (1) and said storage container (90) includes steps (12a, 12b, 93, 93') formed on a lower surface thereof, and wherein, each of said storage container (90) and said fan (1) is securable on said lid with one of said steps (12a, 12b, 93, 93') disposed below said tab (91) and the other of said steps engaged by said chest lid latch.

9. The container system recited in claim 8, wherein said tab (91) comprises a T-Tab, said chest lid including a latch (92) extending upwardly from both opposite sides, and wherein said storage container (90) is securable on said lid with one of said steps (93, 93') thereof disposed below said T-tab and the other of said steps (93, 93') engaged by one of said chest lid latches (92) and said fan (1) is simultaneously securable on said lid with one step (12a, 12b) thereof disposed below said T-tab and the other step (12a, 12b) thereof engaged by the other of said chest lid latches (92).

10. The container system recited in claim 7, wherein each of said container (90) and said fan (1) includes a step (12a, 12b, 93, 93') and a latch (18, 92, 92'), said storage container (90) and said fan (1) stackable on each other such that when one of said container (90) and said fan (1) is stacked on the other of said container (90) and said fan (1), one of said latches (18, 92, 92') engages one of said steps (12a, 12b, 93, 93') to secure said one of said container (90) and said fan (1) to the other of said container (90) and said fan (1).

11. The container system recited in claim 7, wherein said fan (1) comprises a base (10) and a cover (30) pivotably secured to said base (10), said cover (30) including a fan blade (34a, 34b), said latch (18) disposed on said cover (30).

12. The container system recited in claim 11, wherein said base (10) includes battery terminals (19), and wherein a battery pack (40) may be secured on said base (10) and connected to said terminals (19) to power said fan blade (34a, 34b).

13. The container system recited in claim 12, wherein said base (10) includes an AC plug (14), said AC plug (14) connectable to an AC cord to both provide power to said fan (1) and to charge the battery pack (40) when the battery pack (40) is connected to said terminals (19).

14. A fan (1) comprising a step (12a, 12b) and a latch (18), and wherein said fan is configured to be used with a container (90) having an interior storage volume, a step (93, 93') and a latch (92, 92'); and
**characterized in that** each of said fan (1) and the said container (90) is stackable on the other of said fan (1) and said container (90), with the latch (18, 92, 92') of one of said fan (1) and the container (90) engaging the step (12a, 12b, 93, 93') of the other of said fan (1) and the container (90) to secure the fan (1) to the container (90).

15. The fan (1) recited in claim 14, wherein said fan (1) comprising a base (10) and a cover pivotably secured to said base (10), said cover including a fan blade (34a, 34b), said latch disposed and said step disposed on said base (10).
